# EUROPÄISCHE PATENTSCHRIFT

(11) **EP 1 604 737 B1**
(45) Veröffentlichungstag und Bekanntmachung des Hinweises auf die Patenterteilung: **20.12.2017**
(21) Anmeldenummer: 05011441.2
(22) Anmeldetag: 27.05.2005
(51) Int. Cl.: B01J 19/32, B01J 19/02, B01J 19/30

(54) **Packungen und Füllkörper für Wärme-und Stoffaustausch**
Garnissage structuré ou en vrac pour échange de chaleur ou de matière
Packing element and filling bodies for heat or matter exchange

(30) Priorität: 09.06.2004 DE 102004027996
(43) Veröffentlichungstag der Anmeldung: 14.12.2005
(73) Patentinhaber: BASF SE, 67056 Ludwigshafen am Rhein (DE); JULIUS MONTZ GmbH, D-40723 Hilden (DE); Rasselstein GmbH, 56626 Andernach (DE)
(72) Erfinder: Miller, Christian, 67152 Ruppertsberg (DE); Kaibel, Gerd, Dr., 68623 Lampertheim (DE); Jansen, Helmut, 41542 Dormagen (DE); Sauer, Reiner, 56566 Neuwied (DE); Bode, Rolf, 46485 Wesel (DE)
(74) Vertreter: Herzog, Fiesser & Partner Patentanwälte PartG mbB

(56) Entgegenhaltungen:
- WO-A-90/01368
- DE-U1- 9 107 782
- US-A- 3 208 131
- US-A- 4 604 247
- US-B1- 6 524 541

## Beschreibung

Bei Destillationen, Absorptionen, Gaswäschen und ähnlichen verfahrenstechnischen Operationen werden Kolonnen eingesetzt, die Einbauten für den Wärme- und Stoffaustausch zwischen Flüssigkeit und Gas enthalten. Diese Einbauten bestehen entweder aus Böden, wie beispielsweise Glockenböden, Tunnelböden, Siebböden, Dual-flow-Böden oder Ventilböden, aus regellos angeordneten Füllkörpern verschiedener Fomen, wie beispielsweise Raschigringen, Pallringen oder Sattelkörpern, oder aus geordneten Packungen in verschiedenen geometrischen Ausführungen.

Das Dokument DE9107782 offenbart eine Packung aus Kohlenstoffstahl mit einer Beschichtung aus einem organischen Material.

Bei den geordneten Packungen haben sich Geometrien in Kreuzkanalstruktur in der technischen Anwendung breit durchgesetzt. Die Packungen für Destillationskolonnen werden nach dem Stand der Technik aus Teilelementen gleicher Geometrie, beispielsweise zickzackförmig geknickten Blechen, Streckmetallen oder Drahtgeweben hergestellt. Zweck dieser geometrischen Gestaltung ist es, über den gesamten Kolonnenquerschnitt möglichst gleichmäßige Strömungen von Gas und Flüssigkeit einzustellen. Marktübliche Bauformen sind beispielsweise die Bauarten Montz A3, B1 und BSH der Fa. Montz GmbH, D-40705 Hilden, die Bauarten Sulzer BX, CY und Mellapak der Fa. Sulzer Chemtech AG, CH-8404 Winterthur, die Bauart FLEXIPAC der Fa. Koch-Glitsch, Wichita, Kansas 67208 (USA) und die Bauart Intalox der Fa. Norton, Akron, Ohio 44309 (USA). Neben den Bauformen mit geradem Knickverlauf finden auch Packungen mit modifiziertem Knickverlauf, beispielsweise die Bauformen Montz Typ M oder Sulzer Mellapak Plus Anwendung. Die Packungen können auch über den Querschnitt oder die Packungshöhe unterschiedliche Geometrien aufweisen. Beispiele hierfür sind Anstaupackungen oder Packungen mit unterschiedlicher Wandstärke der einzelnen Bleche. Neben den Packungen in Kreuzkanalstruktur finden auch Packungen in abweichender Geometrie Verwendung, beispielsweise die Bauformen Kühni Rombopak oder Sulzer Optiflow.
Die Packungen und Füllkörper werden aus unterschiedlichen Materialien hergestellt. Die Materialauswahl richtet sich nach den im jeweiligen Anwendungsfall vorliegenden Anforderungen hinsichtlich der Material- und Fertigungskosten, der Korrosionsbeständigkeit, der mechanischen Festigkeit und der Stoffaustauschleistung.
Bei der Materialauswahl stellt die Korrosionsbeanspruchung den entscheidenden Faktor dar. Bestimmte Anwendungen zwingen wegen der Korrosivität der aufzutrennenden Stoffe zur Verwendung extrem teurer Sonderwerkstoffe, wie beispielsweise Tantal, Hastelloy oder Titan. Alternativen zum Einsatz dieser teuren Metalle bieten sich nur in Ausnahmefällen.

So wird teilweise versucht, Packungen aus Glas einzusetzen. Trotz gegebener Korrosionsbeständigkeit finden Füllkörper oder Packungen aus Glas meist nur bei kleinen Versuchskolonnen Verwendung. Bei größeren Abmessungen treten bei der Montage oder dem Betrieb, beispielsweise bei dem ungewollten Einführen zu kalter Flüssigkeit in die aufgeheizte Kolonne oder bei einem Siedeverzug, leicht Bruchschäden auf. Packungen und Füllkörper aus Keramik kommen in bestimmten Fällen mit mäßigen Korrosionsanforderungen zum Einsatz. Die Dauerbeständigkeit ist infolge der langsamen Herauslösung des Bindematerials jedoch meist unbefriedigend. Bessere Korrosionseigenschaften weist Porzellan als Werkstoff auf. Nachteilig ist der sehr hohe Preis, der erforderliche größere Kolonnendurchmesser infolge der großen Wandstärke und die eingeschränkte Trennwirksamkeit. Der Einsatz von korrosionsbeständigen Kunststoffen, beispielsweise Polypropylen oder PTFE, ist wegen der Werkstofferweichung auf Anwendungen bei niedrigen Temperaturen, beispielsweise Abgaswaschkolonnen, begrenzt. Zudem weisen Trenneinbauten aus diesen von der Flüssigkeit schlecht benetzbaren Materialien unbefriedigende Trennleistungen auf. Die Flüssigkeit neigt zur Strähnenbildung, die für den Stoffaustausch verfügbare Grenzfläche zwischen Gas und Flüssigkeit verringert. Anwendbar sind diese Materialien daher nur bei Einsatzfällen mit großen Flüssigkeitsbelastungen.

In der überwiegenden Zahl der Anwendungsfälle wird rostfreier austenitischer Edelstahl als Werkstoff eingesetzt, der einen Kompromiss zwischen Korrosionsfestigkeit und Materialpreis darstellt.

Zur Minimierung der Materialkosten werden die Wanddicken für die Füllkörper und Packungen möglichst klein gehalten. Bei geordneten Packungen liegen diese Wanddicken im Bereich von etwa 0,1 bis 0,15 mm. Die Bemühungen zum Einsatz von Packungen mit noch geringerer Wanddicke, beispielsweise 0,07 mm, stoßen auf mechanische Grenzen, indem die Packungen zu instabil werden und sich beispielsweise bei dem Einbau oder während des Betriebs verformen. Wenn die Berührungsflächen zwischen den einzelnen Packungslagen nicht mehr exakt eben sind, bilden sich Maldistributionen der Flüssigkeit aus, die die Trennwirksamkeit der Packungen massiv beeinträchtigen. Auch bei Füllkörpern treten bei zu kleinen Wanddicken Schäden auf, indem sich die unteren Schichten der Füllkörper infolge des Eigengewichts der Füllkörper abplatten, wodurch die Gas- und Flüssigkeitsströmungen behindert werden und die Kolonne nicht mehr betrieben werden kann.

Bei Anwendungen ohne oder mit nur untergeordneter Korrosionsbeanspruchung wurde teilweise versucht, auf kostengünstigen nicht rostfreien Kohlenstoffstahl auszuweichen. In diesem Falle ist man jedoch gezwungen, bei Packungen die Wanddicken auf etwa 0,3 mm anzuheben, um eine zu rasche Durchrostung der Bleche zu verhindern, die bei der Montage oder bei Reinigungsarbeiten zu erwarten ist. Die erforderliche größere Wanddicke verhindert einen Kostenvorteil, da der relative Preisunterschied zwischen rostfreiem Edelstahl und Kohlenstoffstahl nur bei etwa 2 bis 2,5 liegt. Zudem gestaltet sich die Fertigung von Packungen aus dickeren Blechen teurer, da der Werkzeugverschleiß steigt. Die Erfindung betrifft eine Packung gemäß dem Oberbegriff von Anspruch 1.

Es wurde gefunden, dass im Gegensatz zu den bisher verwendeten üblichen Materialien mit einheitlichem Werkstoff, die einen Kompromiss zwischen der mechanischen Festigkeitsanforderung, der Korrosionsbeständigkeit und dem Materialpreis darstellen, günstigere Trenneinbauten gefertigt werden können, wenn man anstelle der einheitlichen Materialien beschichtete Materialen verwendet. Besonders geeignet sind verzinntes Feinstblech (Weißblech) oder verchromtes Feinstblech (ECCS) aus Kohlenstoffstahl. Diese beschichteten Bleche werden in großen Mengen in der Konservenindustrie eingesetzt und stehen kostengünstig zur Verfügung. Bei Einsatzfällen ohne oder mit nur geringer Korrosionsbeanspruchung können bei Verwendung beschichteter Materialen die Kosten der Packungen oder Füllkörper bei vergleichbar guten oder besseren Stoff- und Wärmeaustauscheigenschaften signifikant gesenkt werden.
Die zunächst naheliegende Befürchtung, dass der an fertigungsbedingt auftretenden Schnittstellen des beschichteten Blechs, beispielsweise Blechrändern, kreisförmigen Perforationen oder Schlitzen im Streckmetall, fehlende Korrosionsschutz den technischen Einsatz verhindert, erwies sich in Versuchen als unrichtig. Die Materialien zeigen nur unwesentlichen korrosionsbedingten Materialabtrag, wenn die Beschichtung ausreichend beständig ist. Der zwischen der Beschichtung befindliche Kohlenstoffstahl korrodiert nur langsam. Die in der Materialprüfung üblichen Korrosionstests können die jeweilige Eignung ermitteln. Wenn die Packungen oder Füllkörper der Einwirkung feuchter Luft ausgesetzt sind, wie dies bei Abstellungen, Reinigungen oder der Montage gegeben ist, sind über längere Zeit nur unwesentliche Korrosionseinwirkungen festzustellen.
Vorteilhaft ist, dass derartige Bleche sehr dünnwandig eingesetzt werden können, beispielsweise mit einer Wanddicke von kleiner 0,1 bis 0,15 mm, da sie gegenüber austenitischen Edelstählen eine höhere mechanische Festigkeit aufweisen. Dies ermöglicht zusätzliche Kosteneinsparungen.
Bei der Fertigung der Packungen sind infolge der geringen Wandstärken niedrigere Kosten möglich.
Es wurde gefunden, dass Packungen aus derartigen Materialien im Vakuumbetrieb mit kleinen Flüssigkeitsbelastungen eine höhere destillative Trennleistung aufweisen, wenn die Bleche in bestimmter Weise gefertigt werden. Wenn die Beschichtung aus Zinn oder Chrom nicht in einem eigenen Herstellgang eingeebnet wird, verbleibt eine mikroskopische Oberflächenrauigkeit mit einem Mittenrauwert von etwa 0,2 bis 2,5 µm nach DIN 4768/1. Destillationsversuche zeigten, dass diese zusätzliche Oberflächenrauigkeit die Trennleistung verbessert. Somit lässt sich der in EP 96113184 beschriebene Effekt einer um etwa 10 bis 15 % verbesserten Trennleistung von oberflächenrauen Packungen annähern. Im Gegensatz zur vorliegenden Erfindung müssen bei den in EP 96113184 beschriebenen Packungen teurere Edelstahlpackungen, bevorzugt Edelstähle, die etwa 3 bis 4 % Aluminium enthalten (Kanthal), eingesetzt werden. Dieser gewünschte Effekt lässt sich mit den rauen Weißblechpackungen mit niedrigeren Kosten zumindest angenähert erzielen.

Bei der Packungsfertigung ist darauf zu achten, dass keine große Scherbeanspruchung der Oberfläche bewirkt wird und die Oberflächenrauigkeit möglichst komplett erhalten bleibt. Die maximale Scherbeanspruchung sollte den Wert 10 MPa bei verzinntem Feinstblech (Weißblech) nicht überschreiten. Das verchromte Feinstblech darf hohe Scherbeanspruchungen ( 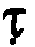 ∼ 0,5 Rₘ) erfahren. Die Zugfestigkeit des Feinstbleches (Weißblech, ECCS) liegt im Bereich 300 bis 700 MPa.

Die relative Erhöhung der destillativen Trennleistung ist besonders bei niedrigen Flüssigkeitsbelastungen zu beobachten. Daher können derartige Packungen und Füllkörper das Anwendungsgebiet im Bereich der Vakuumdestillation erweitern. Bei Destillationsdrücken unterhalb von etwa 50 mbar ist man bisher gezwungen die um den Faktor von etwa 5 teureren Packungen aus Drahtgewebe einzusetzen, die durch die feinen Drähte ebenfalls eine Oberflächenrauigkeit aufweisen.

Die Herstellung von ausreichend korrosionsfesten Packungen aus beschichteten Blechen aus Kohlenstoffstahl gelingt nur, wenn bei der Packungsfertigung spezielle Bedingungen eingehalten werden. Diese speziellen Fertigungsbedingungen betreffen sowohl das Dessinieren, das Aufbringen einer makroskopischen Oberflächenstrukturierung, als auch das Anbringen der Knicke an den Packungsbahnen:
- Das Verhältnis von kleinstem Biegeradius zur Blechdicke soll den Wert 1, bevorzugt den Wert 3, nicht unterschreiten.
- Das Verhältnis der Dicke des dessinierten Blechs zur Dicke des unverformten Blechs soll den Wert von 10, bevorzugt 5, nicht überschreiten.
- Wenn die Dessinierung und das Knicken über einen Walzvorgang erfolgt, soll die Walzgeschwindigkeit den Wert von 2 m/s, bevorzugt 1 m/s, nicht überschreiten.

Die für die Destillation eingesetzten geordneten Packungen weisen in den Blechen üblicherweise Perforationen auf, beispielsweise kreisförmige Öffnungen von etwa 5 mm Durchmesser, die einvorzeitiges Fluten der Packungen verhindern sollen. Ferner werden teilweise aus Streckmetall hergestellte Packungen eingesetzt, die eine Vielzahl von Öffnungen in dem Blech aufweisen. Bei den erfindungsgemäßen Packungen aus beschichtetem Blech werden derartige Öffnungen bevorzugt vermieden, da sie zu einem verstärkten Korrosionsangriff führen können. Bevorzugt werden die Packungen aus unperforierten Blechen hergestellt.

### Beispiel 1:

Als Packungsmaterial wurde zunächst handelsüblicher rostfreier Edelstahl (Werkstoff 1.4404) verwendet. Die Versuchskolonne war eine schutzbeheizte Metallkolonne mit einem Innendurchmesser von 0,55 m. Sie war über eine Höhe von etwa 1,2 m mit 6 geordneten Blechpackungen in Kreuzkanalstruktur mit einer spezifischen Oberfläche von 500 m²/m³ bestückt (Bauart Montz B1-500). Die Neigung der Knicke gegen die Längsachse der Kolonne betrug 45°. Die Blechpackungen wiesen kreisförmige Perforationen auf. Als Testgemisch diente das System iso-Butanol/n-Butanol. Die Kolonne wurde bei einem Druck von 1 bar und totalem Rücklauf betrieben. Die Gas- und Flüssigkeitsbelastung wurden durch Veränderung der Heizleistung variiert. Dabei wurden die Gasbelastungsfaktoren (F-Faktoren) zwischen den Werten 0,05 und 0,85 Pa^{0,5}verändert. Um zuverlässige Messwerte zu erhalten, wurde die Kolonne zur Gleichgewichtseinstellung für jede eingestellte Belastung über einen Zeitraum von 24 Stunden betrieben, bevor vom Kopf- und Sumpfprodukt Proben entnommen und gaschromatographisch untersucht wurden. Die Ergebnisse sind in Tab. 1 dargestellt. Die gemessenen Trennleistungen der Edelstahlpackungen liegen abhängig von der Kolonnenbelastung zwischen 3,7 und 7,0 theoretischen Trennstufen pro Meter Packungslänge.

### Beispiel 2:

Die Versuchsanordnung, das Testgemisch und die Betriebsbedingungen entsprachen dem Beispiel 1. Als Packungsmaterial diente jedoch zinnbeschichtetes Blech aus Kohlenstoffstahl (Weißblech der Fa. Rasselstein, D-56626 Andernach, Typ E2.8/2.8, Oberfläche matt, rau, mit einem Rauigkeitswert von 1,75 bis 2,25 □m). Im Unterschied zu den konventionellen Weißblechqualitäten wies das eingesetzte Weißblech Mikrorauigkeiten auf. Die Ergebnisse der Trennleistungsmessungen sind in Tab. 2 zusammengestellt.

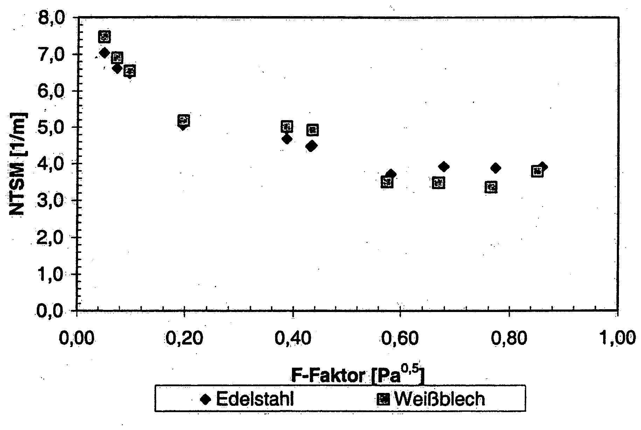

In Figur 1 sind die Trennleistungen der Packungen aus Beispiel 1 und Beispiel 2 gegenübergestellt. Die Packungen aus Weißblech weisen vergleichbare Trenneigenleistungen auf wie die konventionellen Packungen aus Edelstahl.

**Tabelle 1: Trennleistungsmessung mit einer Edelstahlpackung**

| F-Faktor | B_{liq} | Sumpf n-Butanol | Iso-Butanol | Destillat n-Butanol | Iso-Butanol | NTSM |
|---|---|---|---|---|---|---|
| [Pa^{0,5}] | [m³/m²h] | [%] | [%] | [%] | [%] | [1/m] |
| 0,05 | 0,4 | 55,2 | 44,8 | 5,9 | 94,1 | 7,0 |
| 0,07 | 0,6 | 56,4 | 43,6 | 7,3 | 92,7 | 6,6 |
| 0,10 | 0,8 | 56,4 | 43,6 | 7,7 | 92,3 | 6,5 |
| 0,20 | 1,6 | 56,5 | 43,5 | 13,4 | 86,6 | 5,1 |
| 0,39 | 3,2 | 56,5 | 43,5 | 15,3 | 84,7 | 4,5 |
| 0,43 | 3,6 | 56,8 | 43,2 | 16,6 | 83,4 | 4,7 |
| 0,58 | 4,8 | 53,1 | 46,9 | 19,2 | 80,8 | 3,7 |
| 0,68 | 5,6 | 55,3 | 44,7 | 19,2 | 80,8 | 3,9 |
| 0,77 | 6,4 | 55,8 | 44,2 | 19,8 | 80,2 | 3,9 |
| 0,86 | 7,2 | 56,0 | 44,0 | 19,6 | 80,3 | 3,9 |

**Tabelle 2: Trennleistungsmessung mit einer Weißblechpackung**

| F-Faktor | B_{liq} | Sumpf n-Butanol | Iso-Butanol | Destillat n-Butanol | Iso-Butanol | NTSM |
|---|---|---|---|---|---|---|
| [Pa^{0,5}] | [m³/m²h] | [%] | [%] | [%] | [%] | [1/m] |
| 0,05 | 0,4 | 57,9 | 42,1 | 5,5 | 94,5 | 7,5 |
| 0,07 | 0,6 | 59,3 | 40,7 | 7,3 | 92,7 | 6,9 |
| 0,10 | 0,8 | 59,4 | 40,6 | 8,4 | 91,6 | 6,6 |
| 0,20 | 1,6 | 59,0 | 41,0 | 13,9 | 86,1 | 5,2 |
| 0,39 | 3,2 | 56,0 | 44,0 | 13,3 | 86,7 | 5,0 |
| 0,43 | 3,6 | 56,6 | 43,4 | 14,1 | 85,9 | 4,9 |
| 0,58 | 4,8 | 54,6 | 45,4 | 21,4 | 78,6 | 3,5 |
| 0,67 | 5,6 | 55,1 | 44,9 | 21,9 | 78,1 | 3,5 |
| 0,77 | 6,4 | 55,8 | 44,2 | 23,3 | 76,1 | 3,4 |
| 0,85 | 7,1 | 57,1 | 42,9 | 21,0 | 79,0 | 3,8 |

## Patentansprüche

1. Füllkörper oder Packungen für den Wärme- und Stoffaustausch aus metallischen Werkstoffen, wobei das Ausgangsmaterial aus verschiedenen Materialschichten besteht, wobei eine innenliegende Schicht aus kostengünstigem nicht rostfreiem Kohlenstoffstahl besteht und überwiegend die mechanische Stabilität gewährleistet und diese innenliegende Schicht auf beiden Seiten mit einer dünneren Schicht aus einem korrosionsfesteren Material beschichtet ist, **dadurch gekennzeichnet, dass** das korrosionsfestere Material Metall ist, wobei zumindest eine der äußeren Schichten aus Zinn oder Chrom besteht.

2. Füllkörper oder Packungen nach Anspruch 1, **dadurch gekennzeichnet, dass** die Oberflächen der äußeren Schichten Mikrorauigkeiten im Bereich von 0,01 bis 10 µm, bevorzugt von 0,1 bis 5 µm, aufweisen.

3. Füllkörper oder Packungen nach einem der Ansprüche 1 bis 2, **dadurch gekennzeichnet, dass** sie bei der Vakuumdestillation bei Destillationsdrücken unterhalb von 250 mbar_{abs}, bevorzugt unterhalb von 50 mbar_{abs} eingesetzt werden.

4. Füllkörper oder Packungen nach einem der Ansprüche 1 bis 3, **dadurch gekennzeichnet, dass** die Wandstärken im Bereich 0,01 bis 0,5 mm, bevorzugt im Bereich 0,07 bis 0,15 mm liegen.

5. Füllkörper oder Packungen nach einem der Ansprüche 1 bis 4, **dadurch gekennzeichnet, dass** das Verhältnis von kleinstem Biegeradius zur Blechdicke den Wert 1, bevorzugt den Wert 3, nicht unterschreitet.

6. Füllkörper oder Packungen nach einem der Ansprüche 1 bis 5, **dadurch gekennzeichnet, dass** das Verhältnis der Dicke des dessinierten Blechs zur Dicke des unverformten Blechs den Wert von 10, bevorzugt 5, nicht überschreitet.

7. Füllkörper oder Packungen nach einem der Ansprüche 1 bis 6, **dadurch gekennzeichnet, dass** bei der Dessinierung und dem Knicken über einen Walzvorgang die Walzgeschwindigkeit den Wert von 2 m/s, bevorzugt 1 m/s, nicht überschreitet.

8. Füllkörper oder Packungen nach einem der Ansprüche 1 bis 7, **dadurch gekennzeichnet, dass** die Packungen aus unperforierten Blechen hergestellt sind.

9. Verfahren zum Wärme- und Stoffaustausch, **dadurch gekennzeichnet, dass** Füllkörper oder Packungen nach einem der Ansprüche 1 bis 8 eingesetzt werden.

## Claims

1. A random packing or structured packing for heat exchange and mass transfer comprising metallic materials, wherein the starting material consists of various material layers, an inner layer consisting of economical non-stainless carbon steel and predominantly ensuring the mechanical stability and this inner layer being coated on both sides with a thinner layer of a more corrosion-resistant material, wherein the more corrosion-resistant material is metal, wherein at least one of the outer layers consists of tin or chromium.

2. The random packing or structured packing according to claim 1, wherein the surfaces of the outer layers have microroughnesses in the range from 0.01 to 10 µm, preferably from 0.1 to 5 µm.

3. The random packing or structured packing according to any of claims 1 to 2, which is used in vacuum distillation at distillation pressures below 250 mbar_{abs}, preferably below 50 mbar_{abs}.

4. The random packing or structured packing according to any of claims 1 to 3, wherein the wall thicknesses are in the range from 0.01 to 0.5 mm, preferably in the range from 0.07 to 0.15 mm.

5. The random packing or structured packing according to any of claims 1 to 4, wherein the ratio of smallest bending radius to metal sheet thickness is not less than the value 1, preferably not less than the value 3.

6. The random packing or structured packing according to any of claims 1 to 5, wherein the ratio of the thickness of the patterned metal sheet to the thickness of the unformed metal sheet does not exceed the value of 10, preferably 5.

7. The random packing or structured packing according to any of claims 1 to 6, wherein, during the patterning and the bending via a rolling process, the rolling speed does not exceed the value of 2 m/s, preferably 1 m/s.

8. The random packing or structured packing according to any of claims 1 to 7, wherein the structured packing is produced from unperforated metal sheets.

9. A process for heat exchange and mass transfer, wherein random packings or structured packings according to any of claims 1 to 8 are used.

## Revendications

1. Corps de remplissage ou garnissages pour l'échange thermique et de substances en matériaux métalliques, le matériau de départ étant constitué de différentes couches de matériau, une couche interne étant en acier au carbone non inoxydable, peu coûteux et assurant principalement la stabilité mécanique et cette couche interne étant revêtue sur les deux faces par une couche plus mince en un matériau plus résistant à la corrosion, **caractérisés en ce que** le matériau plus résistant à la corrosion est un métal, au moins une des couches externes étant en étain ou en chrome.

2. Corps de remplissage ou garnissages selon la revendication 1, **caractérisés en ce que** les surfaces des deux couches externes présentent des microrugosités dans la plage de 0,01 à 10 µm, de préférence de 0,1 à 5 µm.

3. Corps de remplissage ou garnissages selon l'une quelconque des revendications 1 à 2, **caractérisés en ce qu'**ils sont utilisés lors de la distillation sous vide à des pressions de distillation inférieures à 250 mbars_{abs}, de préférence inférieures à 50 mbars_{abs}.

4. Corps de remplissage ou garnissages selon l'une quelconque des revendications 1 à 3, **caractérisés en ce que** les épaisseurs se situent dans la plage de 0,01 mm à 0,5 mm, de préférence dans la plage de 0,07 mm à 0,15 mm.

5. Corps de remplissage ou garnissages selon l'une quelconque des revendications 1 à 4, **caractérisés en ce que** le rapport du plus petit rayon de courbure à l'épaisseur de tôle ne passe pas sous la valeur de 1, de préférence sous la valeur de 3.

6. Corps de remplissage ou garnissages selon l'une quelconque des revendications 1 à 5, **caractérisés en ce que** le rapport de l'épaisseur de la tôle en relief à l'épaisseur de la tôle non déformée ne passe pas au-dessus de la valeur de 10, de préférence de 5.

7. Corps de remplissage ou garnissages selon l'une quelconque des revendications 1 à 6, **caractérisés en ce que** lors de la réalisation du relief et du flambage via un processus de laminage, la vitesse de laminage ne passe pas au-dessus de la valeur de 2 m/s, de préférence de 1 m/s.

8. Corps de remplissage ou garnissages selon l'une quelconque des revendications 1 à 7, **caractérisés en ce que** les garnissages sont fabriqués en tôles non perforées.

9. Procédé pour l'échange thermique et de substances, **caractérisé en ce qu'**on utilise des corps de remplissage ou des garnissages selon l'une quelconque des revendications 1 à 8.
